# EUROPEAN PATENT SPECIFICATION

(11) **EP 3 918 942 B1**
(45) Date of publication and mention of the grant of the patent: **21.06.2023**
(21) Application number: 20177864.4
(22) Date of filing: 02.06.2020
(51) Int. Cl.: A43B 13/04, A43B 13/32, C09J 175/04, C09J 175/06

(54) **PROCESS FOR MANUFACTURING AND BONDING A SHOE RUBBER OUTSOLE**
VERFAHREN ZUM HERSTELLEN UND VERBINDEN EINER SCHUHLAUFSOHLE AUS KAUTSCHUK
PROCÉDÉ DE FABRICATION DE CHAUSSURES ET DE COLLAGE D'UNE SEMELLE EN CAOUTCHOUC

(43) Date of publication of application: 08.12.2021
(73) Proprietor: Henkel AG & Co. KGaA, 40589 Düsseldorf (DE)
(72) Inventor: Roh, Se Hee, Busan (KR); Ryu, Myoungchul, 604-030 Busan (KR); Cho, Young Tae, 15811 TANGERANG (ID)

(56) References cited:
- WO-A1-03/102080
- WO-A1-2012/069587
- WO-A1-2017/103063
- WO-A2-2011/020757

## Description

The present invention relates to a process for manufacturing a shoe rubber outsole using a special heat and pressure stable water-based polyurethane dispersion adhesive without a pre-treatment of UV irradiation or plasma, as well as a process for manufacturing a shoe using the outsole manufactured as described herein and an polyurethane dispersion -based adhesive composition for the described processes.

Generally, a rubber outsole is prepared by vulcanizing unvulcanized rubber which is cut into a planar or structured shape. Examples of conventional technologies related to this rubber outsole preparation method are disclosed in Korean Patent Registration No. 10-0191275 and Korean Patent Application Publication No. 2000-0063527 as well as in international patent publication WO 2011/020757 A2.

Korean Patent Registration No. 10-0191275 discloses a method of integrally forming a rubber outsole of a shoe and a polyurethane midsole, including the steps of: forming a rubber outsole such that a band-shaped projecting part having a predetermined width is provided over the entire periphery thereof and reticularly-arranged protrusions are formed on the surface thereof; heat-treating the rubber outsole such that the surface temperature thereof is about 40 to 50°C; and spraying an undiluted polyurethane solution onto the heat-treated rubber outsole to integrally form a midsole on the rubber outsole.

Korean Patent Application Publication No. 2000-0063527 discloses a shoe outsole and a method of manufacturing the same in which the outsole and midsole are simultaneously formed and attached through a single process.

International patent publication WO 2011/020757 A2 discloses methods of manufacturing shoes by using a multifunctional primer. In the described processes, the unvulcanized rubber outsole is coated with a multifunctional primer comprising a polyurethane dispersion (PUD), a butadiene rubber solution and a natural rubber solution before vulcanization. The outsole is then thermally activated, coated with an adhesive and attached to the other shoe parts.

International patent publication WO 2017103063 A1 discloses a process for manufacturing a shoe rubber outsole, comprising the steps of: (1) treating an uncured rubber material by UV irradiation or plasma;(2) applying an adhesive composition to the treated rubber material of the step (1) and drying the rubber material, wherein said adhesive composition comprises a heat and pressure stable water-based polyurethane dispersion;(3) curing the rubber material obtained in the step (2).

While the above-described methods are already advantageous over the conventional processes in that they provide for processes that avoid laborious additional washing steps, there is still need in the art for simplification of a rubber outsole and/or shoe manufacturing process.

Accordingly, an object of the present invention is to provide a further simplified method of manufacturing a shoe.

In order to accomplish the above object, independent claim 1 of the present invention provides a process for manufacturing a shoe rubber outsole, comprising the steps of:
(1) providing an uncured rubber material;
(2) applying an adhesive composition to the uncured rubber material of the step (1) and drying the uncured rubber material, wherein said adhesive composition comprises a heat and pressure stable water-based polyurethane dispersion; and
(3) curing the rubber material obtained in the step (2),
wherein the adhesive composition comprises relative to the total weight of the composition:
a) 85 to 99.9 wt.% of a water-based polyurethane dispersion, preferably a polyester polyol based polyurethane;
b) 0.1 to 1 wt.% of at least one cross-linker, preferably a polycarbodiimide;
c) 0.1 to 10 wt.% of at least one modified polyolefin based adhesion promoter, preferably comprising a modified polyolefin, a (meth)acrylate, and an emulsifier;
d) 0 to 5 wt.% of at least one filler, preferably fumed silica;
e) 0 to 0.1 wt.% of at least one fluorescent agent; and
f) 0 to 1 wt.% of at least one HEUR thickener.

Independent claim 9 is directed to a process for manufacturing a shoe, comprising:
(1) thermally activating the shoe rubber outsole obtained according to the process for manufacture of a shoe rubber outsole as described herein; and
(2) attaching the activated shoe rubber outsole to one or more other shoe parts, preferably a shoe midsole.

Independent claim 11 is directed to an adhesive composition for an uncured rubber material, comprising relative to the total weight of the composition:
a) 85 to 99.9 wt.% of a water-based polyurethane dispersion, preferably a polyester polyol based polyurethane;
b) 0.1 to 1 wt.% of at least one cross-linker, preferably a polycarbodiimide;
c) 0.1 to 10 wt.% of at least one modified polyolefin based adhesion promoter, preferably comprising a modified polyolefin, a (meth)acrylate, and an emulsifier;
d) 0 to 5 wt.% of at least one filler, preferably fumed silica;
e) 0 to 0.1 wt.% of at least one fluorescent agent; and
f) 0 to 1 wt.% of at least one HEUR thickener.

Independent claim 12 is directed to the use of the adhesive composition of claim 11.

It has surprisingly been found that by using such a process as described herein several washing steps necessary in the conventional processes known, for example, from KR 10-0191275 and KR 2000-0063527, as well as separate priming and cementing steps can be omitted. In addition, the the special treatment by UV irradiation or plasma as disclosed in WO 2017103063 A1 can also be removed. The application of the special heat and pressure-stable PUD obviate the need for these additional steps and thus significantly simplifies and accelerates the manufacturing process. More specifically, existing processes include a first step of heat-pressing the uncured rubber outsole to cure the rubber material, followed by a step of degreasing the rubber outsole, drying, priming, another drying step, thermally activating the rubber outsole material, application of the adhesive, drying and attaching the other shoe parts. The improved process described in WO 2011/020757 A2 still requires the use of a multifunctional primer composition that is coated onto the uncured rubber material of the outsole without a prior degreasing step prior to curing. After curing, the material is thermally activated and then the adhesive is applied to facilitate attachment of the other shoe parts. The further improved process described in WO 2017103063 A1 still requires the UV irradiation or plasma to pretreat the rubber material. In contrast to these methods, the present process includes the step of providing the uncured material, replacing the priming step, then directly applying the adhesive composition without UV irradiation or plasma treatment. After curing, the rubber outsole material is thermally activated at a temperature of at least 55°C and then the other shoe parts are attached.

"Heat and pressure stable", as used herein in relation to the PUD adhesive, refers to a PUD that can withstand the heat and pressure typically applied for rubber cure, i.e. vulcanization. This usually means a temperature of about 150 to 200°C, typically about 160°C, and a pressure of 50 to 200 bar (kgf/cm²), typically about 150 bar, for about 5 to 10 minutes. This means that said PUD does not suffer from substantial polymer degradation under said conditions.

It has been found that the adhesive composition according to the present invention can achieve an excellent bonding strength when directly cured/crosslinked on the rubber surface in rubber vulcanization process without a pre-treatment of UV irradiation or plasma. This has the advantage that no additional primer that is used to ensure compatibility and adhesion between the rubber material and the adhesive is needed.

The rubber material may be any rubber material known and used for shoe production. Accordingly, included are natural as well as synthetic rubber materials, such as butadiene-based rubbers, including, *inter alia,* butadiene rubber, acrylonitrile-butadiene rubber, styrene-butadiene-styrene rubber and the like. The rubber material that is provided in step (1) of the process described herein may already be preformed, for example by cutting or any other forming technology, to the planar or structured shape of a shoe outsole. The final form of the outsole is typically obtained during the curing, which is commonly done by heat-pressing.

In the next step the uncured and untreated rubber material is contacted with the adhesive composition comprising a PUD, typically by spraying/brushing/painting the composition onto the rubber material surface. Alternatively, other well-known coating and application techniques can be used. The PUD is a water-based polyurethane polymer dispersion, preferably comprising 30 or more, typically 40 to 60 % by weight solids (as, for example, determined by drying loss measurements at 150°C for 30 minutes to evaporate the water/solvents), with the solids being mainly composed of the polyurethane polymer particles of a diameter between 30 and 1000 nm, preferably between 100 and 500 nm, more preferably between 150 and 300 nm (as determined by dynamic light scattering (DLS) according to ISO 22412).

The liquid phase of the dispersion comprises or consists of water, and may, in certain embodiments, also include minor amounts of organic solvents or other liquid components, although it is preferred that it consists essentially of water, i.e. to about 95 vol.%. In the PUD, the liquid phase makes up 40 to 70 % by weight, typically 40 to 60 % by weight.

The polyurethane polymer particles can be made of any suitable polyurethane, typically thermoplastic polyurethanes, preferably made of polyester or polyester polyols and a molar excess, relative to the molar ratio of isocyanate and hydroxyl groups, of polyisocyanates. The polyols are preferably linear polyols. In various embodiments, the polyurethane is thus an NCO-terminated polyurethane, preferably obtained from a reaction mixture comprising a polyester polyol, preferably obtained from a reaction mixture comprising adipic acid and 1,4-butanediol, and a molar excess relative to the molar ratio of isocyanate and hydroxyl groups of a polyisocyanate, preferably an aliphatic diisocyanate, more preferably hexamethylenediisocyanate (HDI) or isophoronediisocyanate (IPDI).

In various embodiments, the adhesive composition comprises, in addition to the PUD, which comprises polyurethane polymer particles and water, one or more additional components, such as, for example, known auxiliaries, including fillers, stabilizers, conservatives, antifoaming agents, emulsifiers, rheology modifying agents, colorants, and the like.

The adhesive compositions of the present invention preferably contain at least one cross-linker, with the cross-linker preferably being selected from polycarbodiimides and polyaziridines, more preferably polycarbodiimides. Exemplary cross-linkers that can be used according to the invention include, without limitation, N,N'-dicyclohexylcarbodiimide (DCC) and N,N'-diisopropylcarbodiimide (DIC). The cross-linker is advantageous, as it renders the polyurethane heat and pressure stable and less prone to degradation, as discussed above. Commercially available PUD-based adhesives without such a cross-linker often lack the required heat and pressure stability necessary to withstand the rubber vulcanization conditions.

The modified polyolefin based adhesion promoter improves the compatibility between rubber and PUD in the adhesive and modifies the rubber surface to generate the initial cohesion grow-up.

As the main component in the adhesion promoter, modified polyolefins generally include modified polyolefins obtained by unsaturated carboxylic acid or acid anhydride modification, acryl modification, chlorinating modification or combinations of such modifications of polyolefins. As the modified polyolefins having a polyoxyalkylene chain, there may be used a polyoxyethylene chain, polyoxypropylene chain or a polyoxyethylene and polyoxypropylene block chain.

The adhesion promoter optionally comprises one or more (meth)acrylates to improve the compatibility with the rubber and bonded adhesive layer, and in turn to increase the bonding performance of the adhesive composition. As examples of the (meth)acrylates, there may be mentioned alkyl esters of (meth)acrylic acid such as methyl (meth)acrylate, ethyl (meth)acrylate, nor i-propyl (meth)acrylate, n-, i- or t-butyl (meth)acrylate, 2-ethylhexyl (meth)acrylate, cyclohexyl (meth)acrylate, lauryl (meth)acrylate, stearyl (meth)acrylate and the like, and any of these may be used alone or in combinations of two or more. Throughout the present specification, the term "(meth)acrylic" means "acrylic or methacrylic", and the term "(meth)acrylate" means "acrylate or methacrylate".

The modified polyolefins may be added in the adhesive composition as aqueous dispersion which is obtained by dispersing the modified polyolefin in an aqueous medium, and optionally adding an emulsifier.

As examples of emulsifiers there may be mentioned nonionic emulsifiers such as polyoxyethylene monooleyl ether, polyoxyethylene monostearyl ether, polyoxyethylene monolauryl ether, polyoxyethylene tridecyl ether, polyoxyethylene phenyl ether, polyoxyethylene nonylphenyl ether, polyoxyethylene octylphenyl ether, polyoxyethylene monolaurate, polyoxyethylene monostearate, polyoxyethylene monooleate, sorbitan monolaurate, sorbitan monostearate, sorbitan trioleate and polyoxyethylene sorbitan monolaurate; and anionic emulsifiers such as sodium salts or ammonium salts of alkylsulfonic acid, alkylbenzenesulfonic acid and alkylphosphoric acid; as well as polyoxyalkylene group-containing anionic emulsifiers having an anionic group and a polyoxyalkylene group such as a polyoxyethylene group or polyoxypropylene group in the molecule or reactive anionic emulsifiers having an anionic group and a polymerizable unsaturated group in the molecule, any of which may be used alone or in combinations of two or more.

According to the invention, the adhesive composition comprises relative to the total weight of the composition:
a) 85 to 99.9 wt.%, preferably 90 to 99 wt.% of a water-based polyurethane dispersion;
b) 0.1 to 1 wt.%, preferably 0.1 to 0.5 wt.% of at least one cross-linker;
c) 0.1 to 20 wt.%, preferably 0.05 to 10 wt.-% of at least one modified polyolefin based adhesion promoter;
d) 0 to 5 wt.%, preferably 0.2 to 3 wt.% of at least one filler;
e) 0 to 0.1 wt.%, preferably 0.01 to 0.05 wt.% of at least one fluorescent agent; and
f) 0 to 1 wt.%, preferably 0.3 to 0.8 wt.% of at least one HEUR thickener.

In one preferred embodiment, the modified polyolefin based adhesion promoter comprises a modified polyolefin, a (meth)acrylate, and an emulsifier. The filler used in the adhesive composition may be selected from all known fillers suitable for PUD-based adhesives and the disclosed rubber applications. Preferred fillers are fumed silicas.

Another preferred group of additives used in the adhesion composition are optical brighteners. Use may be made here of the optical brighteners which are customary in adhesives. They are added as an aqueous solution or solution in an organic solvent to the polymer solution. Examples of optical brighteners are derivatives of diaminostilbenedisulfonic acid or its alkali metal salts. Suitable, for example, are salts of 4,4'-bis(2-anilino-4-morpholino-1,3,5-triazinyl-6-amino)stilbene-2,2'-disulfonic acid or compounds of similar structure which instead of the morpholino group carry a diethanolamino group, a methylamino group, an anilino group or a 2-methoxyethylamino group. Furthermore, brighteners of the substituted diphenylstyryl type may be present in the adhesive composition, and examples being the alkali metal salts of 4,4'-bis(2-sulfostyryl)biphenyl, 4,4'-bis(4-chloro-3-sulfostyryl)biphenyl or 4-(4-chlorostyryl)-4'-(2-sulfostyryl)biphenyl. Mixtures of the aforementioned brighteners may also be used.

HEUR type thickeners (*hydrophobically* modified ethylene oxide-urethane block copolymers) are also known in the art and all thickeners of these type suitable for the disclosed applications can be used. The adhesive composition is preferably liquid and has a viscosity of less than 5,000 mPa·s, preferably from 10 to 2,000 mPa s, more preferably 50 to 1,000 mPa·s at 25°C as determined by a Brookfield viscometer (Spindle No. 63, 12 rpm). This allows simple application of the composition onto the uncured rubber material by existing instrumentation without unnecessary dripping, etc.

The step of curing the rubber material treated with the adhesive composition is preferably carried out by heat-pressing. This heat-pressing leads to vulcanization of the rubber and is typically carried out at temperatures above 120°C, such as 150 to 200°C, preferably about 160°C, and under increased pressure, such as 50 bar or more, typically 50 to 200 bar, preferably about 150 bar. The heat-pressing is carried out for a time sufficient to allow full curing of the rubber material, typically 2 minutes or more, such as 3 to 30 minutes, commonly 5 to 10 minutes. For the heat-pressing known and existing instrumentation may be used. In fact, the step of heat-pressing is carried out under the same conditions and using the same instrumentation as currently known in the art. As also mentioned above, the curing step may also include the feature of giving the rubber material the final form of the outsole. Typically, the rubber material is provided in form of a preform, which may, for example, be roughly cut to the form of the outsole. In these embodiments, the curing process, in particular by heat-pressing, imparts the final form to the outsole. The heat-pressing (vulcanization) may thus be carried out in a mold.

The manufacture of the shoe rubber outsole preferably comprises no additional washing steps or steps of applying a primer or an adhesive other than that described above. However, after application of the adhesive, a drying step can be carried out.

Once the shoe outsole has been manufactured, said rubber outsole may be used for the manufacture of the complete shoe. In such a process, the outsole is typically attached to other shoe parts, in particular the midsole. This process is generally carried out by thermally activating the shoe rubber outsole and then attaching the other shoe parts, in particular the shoe midsole, to the outsole. Other shoe parts that may be attached to the outsole or the midsole in this process include, without limitation, an insole, an upper and the like.

The step of thermally activating the rubber outsole material is generally known in the art and preferably includes heating the material to a temperature of more than 50 or 55°C or higher. Preferred are temperatures in the range of 55 to 65°C. The step preferably takes 30 to 200 seconds, more preferably about 100 seconds. Thereafter, the activated rubber outsole is attached to another shoe part, preferably the midsole, and optionally the upper part of the shoe, typically by using a hydraulic (walled) sole attaching machine.

As already described in connection with the process of manufacturing the shoe outsole, the process of manufacturing the shoe does preferably neither includes any additional steps of degreasing or cleaning the outsole prior to the thermal activation and attachment nor steps of priming or applying another adhesive to the shoe rubber outsole prior to the activation and attachment step. However, it is possible to subject the other shoe parts, in particular the midsole, to conventional treatments before attachment to the outsole.

As described above, the method of manufacturing a shoe according to the present invention, compared to conventional shoe manufacturing methods, is advantageous in that steps of washing and priming a rubber outsole need not be conducted, thus improving productivity. Further, the method of manufacturing a shoe according to the present invention is advantageous in that production costs can be reduced by decreasing the number of workers and facilities due to the omission of the washing and priming processes and in that a shoe can be manufactured in an manner friendly to the environment due to the omission of the washing process.

The present invention also covers the special adhesive composition used in the processes of the invention and the use thereof for treatment of an uncured rubber material, preferably a shoe rubber outsole. It is understood that all the embodiments disclosed above in connection with the inventive processes, in particular those relating to the composition of the adhesive, are similarly applicable to the adhesive composition as such and its use.

The following examples further serve to illustrate the invention without, however, limiting it thereto.

### Examples

### Example 1: Adhesive composition

| No. | Material | parts by weight |
|---|---|---|
| 1 | Polyester PUD | 93.0 |
| | (- based on NCO-terminated polyurethane prepolymer prepared from adipic acid/1,4-butanediol and HDI(base)/IPDI) | |
| | - solid content: 48-50 % | |
| | - particle size: 200-240 nm (determined by DLS) | |
| 2 | Modified polyolefin (about 10% aqueous solution containing (meth)acrylate and emulsifier, commercially available from Soo Technical Corporation, South Korea under the trade name of ST-NIC-2000) | 5.0 |
| 3 | N,N'-dicyclohexylcarbodiimide or N,N'-diisopropylcarbodiimide (in 2-methoxy-1-methylethyl acetate) | 0.2 |
| 4 | Fumed silica | 1.0 |
| | (15% solution in water) | |
| 5 | Optical brightener (Tinopal^{®} NFW 10 liquid, commercially available from BASF) | 0.02 |
| 6 | HEUR type thickener | 0.5 |

### Manufacture:

| |
|---|
| 1. Input material no.1 into tank and start mixing for 30 minutes. |
| 2. Mix material no.2 and no.3 in sequence and mix for 1hr at room temperature. |
| 3. Input material no.4 slowly and mixing for 1 hour. |
| 4. Input material no.5 slowly and mixing for 1 hour. |
| 5. Input material no.6 by dropping around for 1 hour and mixing for 3 hours. |

### Example 2: Shoe manufacture

The adhesive composition according to example 1 was uniformly applied to an unvulcanized rubber outsole using a sprayer and then a rubber vulcanization process was performed at 160°C and 150 bar for 420 seconds. The vulcanized rubber outsole was thermally activated in a heating chamber at 55°C for about 100 seconds. Thereafter, the thermally activated rubber outsole was manually attached to a midsole and an upper and then further attached using a hydraulic walled sole attaching machine to manufacture a shoe.

After 1 day and/or 18 days, tests for measuring the bonding strength between the rubber outsole and the midsole were conducted by measuring peel strength using a peel tester (5580, Instron).

The bonding strength of a shoe manufactured according to the present invention was 7.5 and 8.1 kgf/cm² after 1 day and 18 days respectively and the rubber materials were broken. It was also observed for a shoe that had been manufactured using the same process but Dispercoll U 2793 XP (PUD-based adhesive, commercially available from Bayer MaterialScience), that the bonding strength showed only 4.0 and 4.3 kgf/cm² after 1 day and 18 days respectively and the adhesives were separated from the rubber material.

For comparative purposes, the average bonding strength of a shoe manufactured according to a conventional manufacturing process using UV radiation pre-treatment as described in Example 1 of WO 2017103063 A1, and of a shoe manufactured according to the process steps of the present invention but using an adhesive composition having no adhesive promoter were also determined as 5.0 kgf/cm², and 3.5 kgf/cm² with point failure, respectively, which were significantly lower than that achieved according to the process of the present invention.

## Claims

1. Process for manufacturing a shoe rubber outsole, comprising the steps of:
a) providing an uncured rubber material;
b) applying an adhesive composition to the uncured rubber material of the step (1) and drying the rubber material, wherein said adhesive composition comprises a heat and pressure stable water-based polyurethane dispersion; and
c) curing the rubber material obtained in the step (2),
wherein the adhesive composition comprises relative to the total weight of the composition:
a) 85 to 99.9 wt.% of a water-based polyurethane dispersion, preferably a polyester polyol based polyurethane;
b) 0.1 to 1 wt.% of at least one cross-linker, preferably a polycarbodiimide;
c) 0.1 to 10 wt.% of at least one modified polyolefin based adhesion promoter;
d) 0 to 5 wt.% of at least one filler, preferably fumed silica;
e) 0 to 0.1 wt.% of at least one optical brightener; and
f) 0 to 1 wt.% of at least one HEUR thickener.

2. The process according to claim 1, wherein
(i) the uncured rubber material in step (a) is a shoe rubber outsole preform; and/or
(ii) the rubber material obtained in step (b) is cured and formed to a shoe rubber outsole in step (3); and/or
(iii) the rubber material is cured in step (c) by heat-pressing.

3. The process according to at least one of claims 1 to 2, wherein the process does not comprise an additional step of treating the uncured rubber material by UV irradiation or plasma.

4. The process according to at least one of claims 1 to 3, wherein the polyurethane is an NCO-terminated polyurethane, preferably obtained from a reaction mixture comprising a polyester polyol, preferably obtained from a reaction mixture comprising adipic acid and 1,4-butanediol, and a molar excess relative to the molar ratio of isocyanate and hydroxyl groups of a polyisocyanate, preferably an aliphatic diisocyanate, more preferably HDI or IPDI.

5. The process according to at least one of claims 1 to 4, wherein the cross-linker is selected from the group consisting of polycarbodiimides and polyaziridines, preferably polycarbodiimides.

6. The process according to at least one of claims 1 to 5, wherein the modified polyolefin based adhesion promoter comprises modified polyolefins obtained by unsaturated carboxylic acid or acid anhydride modification, acryl modification, chlorinating modification or combinations thereof of the polyolefins.

7. The process according to at least one of claims 1 to 6, wherein the filler is fumed silica.

8. The process according to at least one of claims 1 to 7, wherein the adhesive composition is liquid and has a viscosity of less than 5,000 mPa s, preferably 10 to 2,000 mPa s, more preferably 50 to 1,000 mPa·s at 25°C as determined by a Brookfield viscometer, Spindle No. 63, 12 rpm.

9. Process for manufacturing a shoe, comprising
(1) thermally activating the shoe rubber outsole obtained according to the process of at least one of claims 1 to 8; and
(2) attaching the activated shoe rubber outsole to one or more other shoe parts, preferably a shoe midsole.

10. Process according to claim 9, wherein the process does not comprise additional steps of degreasing or cleaning or priming or applying an adhesive to the shoe rubber outsole prior to the step (2).

11. Adhesive composition for an uncured rubber material, comprising relative to the total weight of the composition:
a) 85 to 99.9 wt.% of a water-based polyurethane dispersion, preferably a polyester polyol based polyurethane;
b) 0.1 to 1 wt.% of at least one cross-linker, preferably a polycarbodiimide;
c) 0.1 to 10 wt.% of at least one modified polyolefin based adhesion promoter, preferably comprising a modified polyolefin, a (meth)acrylate, and an emulsifier;
d) 0 to 5 wt.% of at least one filler, preferably fumed silica;
e) 0 to 0.1 wt.% of at least one optical brightener; and
f) 0 to 1 wt.% of at least one HEUR thickener.

12. Use of the adhesive composition according to claim 11 for treatment of an uncured rubber material, preferably a shoe rubber outsole.

## Patentansprüche

1. Verfahren zum Herstellen einer Schuhgummilaufsohle, umfassend die Schritte:
a) Bereitstellen eines ungehärteten Gummimaterials;
b) Auftragen einer Klebstoffzusammensetzung auf das ungehärtete Gummimaterial des Schritt (1) und Trocknen des Gummimaterials, wobei die Klebstoffzusammensetzung eine hitze- und druckstabile wasserbasierte Polyurethandispersion umfasst; und
c) Aushärten des Gummimaterials, das in Schritt (2) erhalten wird,
wobei die Klebstoffzusammensetzung relativ zu dem Gesamtgewicht der Zusammensetzung umfasst:
a) zu 85 bis 99,9 Gew.-% eine wasserbasierte Polyurethandispersion, vorzugsweise ein polyesterpolyolbasiertes Polyurethan;
b) zu 0,1 bis 1 Gew.-% mindestens einen Vernetzer, vorzugsweise ein Polycarbodiimid;
c) zu 0,1 bis 10 Gew.-% mindestens ein modifiziertes Polyolefin basierend auf einem Haftvermittler;
d) zu 0 bis 5 Gew.-% mindestens ein Füllstoff, vorzugsweise pyrogenes Siliciumdioxid;
e) zu 0 bis 0,1 Gew.-% mindesten ein optischer Aufheller; und
f) zu 0 bis 1 Gew.-% mindestens ein HEUR-Verdicker.

2. Verfahren nach Anspruch 1, wobei
(i) das ungehärtete Gummimaterial in Schritt (a) eine Schuhgummilaufsohlenvorform ist; und/oder
(ii) das Gummimaterial, das in Schritt (b) erhalten wird, ausgehärtet und in Schritt (3) zu einer Schuhgummilaufsohle ausgebildet wird; und/oder
(iii) das Gummimaterial in Schritt (c) durch Heißpressen gehärtet wird.

3. Verfahren nach mindestens einem der Ansprüche 1 bis 2, wobei das Verfahren keinen zusätzlichen Schritt eines Behandelns des ungehärteten Gummimaterials durch UV-Bestrahlung oder Plasma umfasst.

4. Verfahren nach mindestens einem der Ansprüche 1 bis 3, wobei das Polyurethan ein NCO- terminiertes Polyurethan ist, das vorzugsweise aus einer Reaktionsmischung erhalten wird, umfassend ein Polyesterpolyol, das vorzugsweise aus einer Reaktionsmischung erhalten wird, umfassend Adipinsäure und 1,4-Butandiol, und ein Molarüberschuss relativ zu dem Molverhältnis von Isocyanat und Hydroxylgruppen eines Polyisocyanats, vorzugsweise eines aliphatischen Diisocyanats, weiter bevorzugt HDI oder IPDI.

5. Verfahren nach mindestens einem der Ansprüche 1 bis 4, wobei der Vernetzer aus der Gruppe ausgewählt ist, bestehend aus Polycarbodiimiden und Polyaziridinen, vorzugsweise Polycarbodiimiden.

6. Verfahren nach mindestens einem der Ansprüche 1 bis 5, wobei der modifizierte polyolefinbasierte Haftvermittler modifizierte Polyolefine umfasst, die durch ungesättigte Carbonsäure oder Säureanhydridmodifikation, Acrylmodifizierung, Chlorierungsmodifikation oder Kombinationen davon der Polyolefine erhalten werden.

7. Verfahren nach mindestens einem der Ansprüche 1 bis 6, wobei der Füllstoff pyrogenes Siliciumdioxid ist.

8. Verfahren nach mindestens einem der Ansprüche 1 bis 7, wobei die Klebstoffzusammensetzung flüssig ist und eine Viskosität von weniger als 5.000 mPa·s, vorzugsweise 10 bis 2.000 mPa·s, weiter bevorzugt 50 bis 1.000 mPa·s bei 25 °C, aufweist, wie durch ein Brookfield-Viskosimeter, Spindel Nr. 63, 12 U/min, bestimmt.

9. Verfahren zum Herstellen eines Schuhs, umfassend
(1) thermisches Aktivieren der Schuhgummilaufsohle, die gemäß dem Verfahren von mindestens einem der Ansprüche 1 bis 8 erhalten wird; und
(2) Befestigen der aktivierten Schuhgummilaufsohle an einem oder mehreren anderen Schuhteilen, vorzugsweise einer Schuhzwischensohle.

10. Verfahren nach Anspruch 9, wobei das Verfahren vor dem Schritt (2) keine zusätzlichen Schritte eines Entfettens oder Reinigens oder Vorbereitens oder Auftragens eines Klebstoffs auf die Schuhgummilaufsohle umfasst.

11. Klebstoffzusammensetzung für ein ungehärtetes Gummimaterial, umfassend relativ zu dem Gesamtgewicht der Zusammensetzung:
a) zu 85 bis 99,9 Gew.-% eine wasserbasierte Polyurethandispersion, vorzugsweise ein polyesterpolyolbasiertes Polyurethan;
b) zu 0,1 bis 1 Gew.-% mindestens einen Vernetzer, vorzugsweise ein Polycarbodiimid;
c) 0,1 bis 10 Gew.-% mindestens einen modifizierten polyolefinbasierten Haftvermittler, vorzugsweise umfassend ein modifiziertes Polyolefin, ein (meth)Acrylat und einen Emulgator;
d) zu 0 bis 5 Gew.-% mindestens ein Füllstoff, vorzugsweise pyrogenes Siliciumdioxid;
e) zu 0 bis 0,1 Gew.-% mindesten ein optischer Aufheller; und
f) zu 0 bis 1 Gew.-% mindestens ein HEUR-Verdicker.

12. Verwendung der Klebstoffzusammensetzung nach Anspruch 11 für eine Behandlung eines ungehärteten Gummimaterials, vorzugsweise einer Schuhgummilaufsohle.

## Revendications

1. Procédé de fabrication d'une semelle extérieure en caoutchouc de chaussure, comprenant les étapes consistant à :
a) fournir un matériau de caoutchouc non durci ;
b) appliquer une composition adhésive au matériau de caoutchouc non durci de l'étape (1) et sécher le matériau de caoutchouc, dans lequel ladite composition adhésive comprend une dispersion de polyuréthane à base d'eau stable à la chaleur et à la pression ; et
c) durcir le matériau de caoutchouc obtenu à l'étape (2),
dans lequel la composition adhésive comprend par rapport au poids total de la composition :
a) 85 à 99,9 % en poids d'une dispersion de polyuréthane à base d'eau, de préférence d'un polyuréthane à base de polyester polyol ;
b) 0,1 à 1 % en poids d'au moins un agent de réticulation, de préférence un polycarbodiimide ;
c) 0,1 à 10 % en poids d'au moins un promoteur d'adhérence à base de polyoléfine modifiée ;
d) 0 à 5 % en poids d'au moins une charge, de préférence de la silice sublimée ;
e) 0 à 0,1 % en poids d'au moins un azurant optique ; et
f) 0 à 1 % en poids d'au moins un épaississant HEUR.

2. Procédé selon la revendication 1, dans lequel
(i) le matériau de caoutchouc non durci à l'étape (a) est une préforme de semelle extérieure en caoutchouc de chaussure ; et/ou
(ii) le matériau de caoutchouc obtenu à l'étape (b) est durci et formé en une semelle extérieure en caoutchouc de chaussure à l'étape (3) ; et/ou
(iii) le matériau de caoutchouc est durci à l'étape (c) par pressage à chaud.

3. Procédé selon au moins l'une des revendications 1 à 2, dans lequel le procédé ne comprend pas une étape supplémentaire consistant à traiter le matériau de caoutchouc non durci par irradiation UV ou plasma.

4. Procédé selon au moins l'une des revendications 1 à 3, dans lequel le polyuréthane est un polyuréthane à terminaison NCO, de préférence obtenu à partir d'un mélange réactionnel comprenant un polyester polyol, de préférence obtenu à partir d'un mélange réactionnel comprenant de l'acide adipique et du 1,4-butanediol, et un excès molaire par rapport au rapport molaire des groupes isocyanate et hydroxyle d'un polyisocyanate, de préférence un diisocyanate aliphatique, plus préférablement le HDI ou l'IPDI.

5. Procédé selon au moins l'une des revendications 1 à 4, dans lequel l'agent de réticulation est choisi dans le groupe constitué par des polycarbodiimides et polyaziridines, de préférence des polycarbodiimides.

6. Procédé selon au moins l'une des revendications 1 à 5, dans lequel le promoteur d'adhérence à base de polyoléfine modifiée comprend des polyoléfines modifiées obtenues par modification par un acide ou anhydride d'acide carboxylique insaturé, modification par acryle, modification par chloration ou des combinaisons de celles-ci des polyoléfines.

7. Procédé selon au moins l'une des revendications 1 à 6, dans lequel la charge est de la silice sublimée.

8. Procédé selon au moins l'une des revendications 1 à 7, dans lequel la composition adhésive est liquide et a une viscosité inférieure à 5 000 mPa·s, de préférence de 10 à 2 000 mPa s, plus préférablement de 50 à 1 000 mPa·s à 25 °C telle que déterminée par un viscosimètre Brookfield, mobile n° 63, 12 tr/min.

9. Procédé de fabrication d'une chaussure, comprenant
(1) l'activation thermique de la semelle extérieure en caoutchouc de chaussure obtenue selon le procédé d'au moins l'une des revendications 1 à 8 ; et
(2) la fixation de la semelle extérieure en caoutchouc de chaussure activée à une ou plusieurs autres parties de chaussure, de préférence à une semelle intercalaire de chaussure.

10. Procédé selon la revendication 9, dans lequel le procédé ne comprend pas d'étapes supplémentaires consistant à dégraisser ou nettoyer ou amorcer ou appliquer un adhésif sur la semelle extérieure en caoutchouc de chaussure juste avant l'étape (2).

11. Composition adhésive pour un matériau de caoutchouc non durci, comprenant par rapport au poids total de la composition :
a) 85 à 99,9 % en poids d'une dispersion de polyuréthane à base d'eau, de préférence d'un polyuréthane à base de polyester polyol ;
b) 0,1 à 1 % en poids d'au moins un agent de réticulation, de préférence un polycarbodiimide ;
c) 0,1 à 10 % en poids d'au moins un promoteur d'adhérence à base de polyoléfine modifiée, de préférence comprenant une polyoléfine modifiée, un (méth)acrylate, et un émulsifiant ;
d) 0 à 5 % en poids d'au moins une charge, de préférence de la silice sublimée ;
e) 0 à 0,1 % en poids d'au moins un azurant optique ; et
f) 0 à 1 % en poids d'au moins un épaississant HEUR.

12. Utilisation de la composition adhésive selon la revendication 11 pour le traitement d'un matériau de caoutchouc non durci, de préférence une semelle extérieure en caoutchouc de chaussure.
